# EUROPÄISCHE PATENTSCHRIFT

(11) **EP 2 252 410 B1**
(45) Veröffentlichungstag und Bekanntmachung des Hinweises auf die Patenterteilung: **14.12.2011**
(21) Anmeldenummer: 08839931.6
(22) Anmeldetag: 10.10.2008
(51) Int. Cl.: B05D 7/24, B05D 5/00

(54) **OBERFLÄCHENMODIFIKATION**
SURFACE MODIFICATION
MODIFICATION DE SURFACE

(30) Priorität: 10.10.2007 AT 16192007
(43) Veröffentlichungstag der Anmeldung: 24.11.2010
(73) Patentinhaber: Greiner Bio-One GmbH, 72636 Frickenhausen (DE)
(72) Erfinder: JEHLE, Heinrich, 72636 Frickenhausen (DE)
(74) Vertreter: Ofner, Clemens
(86) Internationale Anmeldenummer: PCT/EP2008/008598
(87) Internationale Veröffentlichungsnummer: WO 2009/049838

(56) Entgegenhaltungen:
- EP-A- 1 435 262
- WO-A-00/71613
- WO-A-98/28026
- WO-A-2006/109055
- DE-A1- 3 712 490
- US-A1- 2004 206 399
- US-A1- 2005 250 156

## Beschreibung

Die vorliegende Erfindung beschreibt die Verwendung eines Trägers aus zumindest einem Substrat, das zumindest bereichsweise eine durch Plasmapolymerisation von Einzelbausteinen hergestellte Beschichtung aufweist, sowie ein Verfahren zu dessen Herstellung.

Bei Systemen für die Mikrofluidik oder in Microarry-Produkten zur Analyse biologischer Proben kommt dem Träger bzw. der Oberfläche bzw. der Oberflächenbeschaffenheit des Trägers eine große Bedeutung zu. Analysen dieser Art sind oft sehr mühselig und zeitaufwendig und es ist daher besonders wichtig dass die hierfür verwendeten Assays empfindlich und zuverlässig sind. Insbesondere kann durch Oberflächenmodifikationen, wie zB. durch Veränderung der chemischen Funktionalität, eine für die Verwendung vorteilhafte Veränderung erzielt werden.

Chemisch modifizierte Oberflächen sind beispielsweise in der pharmazeutischen Industrie zur Entwicklung biologischer Testsysteme unabdingbar, da durch die gezielte Ausrüstung der Plattform mit definierten Schichten chemischer Funktionseinheiten die Interaktion Oberfläche/Biomolekül gesteuert werden kann. Die Microarraytechnologie basiert ebenfalls auf der Nutzung chemisch modifizierter Oberflächen zur Immobilisierung von DNA (Aminoberfläche) oder Proteinen (Aldehyd-, Epoxyoberfläche) [M. Pirrung, Angew. Chem. 2002,41, 1276. - N. Zammatteo et. al., Analytical Biochemistry 2000, 280, 143. - M. Shena: Microarrays, A practical approach, Oxford University Press 1999.]

Genomanalysen beinhalten die Verwendung biologischen Materials umfassend Nukleinsäuren und Proteine, wobei viele Analysen parallel durchgeführt werden können. Üblicherweise werden Biomoleküle durch chemische Kopplung oder Adsorption immobilisiert. Zurzeit werden Arrays mit Biomolekülen hergestellt, indem Probenaliquote unter Bedingungen abgeschieden werden, die es den Molekülen erlauben, an die Arrayoberfläche zu binden oder gebunden zu werden. Alternativ oder zusätzlich können Biomoleküle auf der Arrayoberfläche synthetisiert oder direkt oder indirekt immobilisiert werden. Die Anzahl unterschiedlicher Proben, die auf einem einzelnen Array aufgebracht werden, kann sehr hoch sein. Das Aufbringen kann durch Array-Printer erleichtert werden. Arrays sind üblicherweise Einmalprodukte, wodurch es wünschenswert ist bei deren Produktion ein hohes Maß an Reproduzierbarkeit und ein Minimum an Fehlern zu erzielen.

Um die gewünschten Effekte zu erzielen, ist bekannt Träger mit vielen Vertiefungen oder Mikrofluidikvorrichtungen chemisch zu behandeln, um die Affinität bzw. Retention ausgewählter Moleküle auf ihrer Oberfläche zu verbessern. Dabei ist es wünschenswert, die behandelte Oberfläche mit dem Zielmolekül mit hoher Affinität und Retention zu binden ohne gleichzeitig seine biologische Aktivität negativ zu beeinflussen, sodass ein reproduzierbarer Assay durchführbar ist.

Aus der WO 01/031339 A1 ist die Anwendung der Plasmapolymerisation bekannt. Dabei wird ein ultradünner ca. 200nm vernetzter Polymerfilm auf einem Substrat mit kontrollierbarer chemischer Funktionalität abgeschieden. Die Eigenschaften des Substrats bleiben dabei weitgehend unbeeinträchtigt. Plasmen oder ionische Gase werden üblicherweise durch ein elektrisches Feld angeregt. Es handelt sich um ein äußerst reaktives chemisches Milieu, das Ionen, Elektronen, neutrale Teilchen und elektromagnetische Strahlung umfasst. Bei reduziertem Druck lassen sich Bedingungen schaffen, bei denen sich die Temperatur der Elektronen deutlich von jener der Ionen und der neutralen Teilchen unterscheidet. Es wurde von H. K. Yasuda, Plasma Polymerisation, Academic Press, London 1985, beschrieben, dass organische Verbindungen (Monomere) rein oder zusammen mit anderen Gasen, z.B. Argon, polymerisieren, wobei sowohl Oberflächen in Kontakt mit dem Plasma als auch stromabwärts der Entladung beschichtet werden. Die Plasmapolymerisation ist eine effektive Route zur lösungsmittelfreien Generierung dünner (>5 nm) Schichten. Die Erzeugung eines kalten Plasmas geschieht im Vakuum durch eine elektrische Entladung, durch die eine sehr reaktive Umgebung bestehend aus Ionen, Radikalen, Elektronen und metastabilen Teilchen erzeugt wird. Durch die Wahl geeigneter Reaktionsbedingungen wie Aktivierung, Druck, Leistungseintrag, Trägergase und organische Ausgangsverbindungen (Monomere) kann eine Polymerisation der Reaktionspartner und die Abscheidung des gebildeten Plasmapolymers auf Substraten-erreicht werden. Plasmapolymere unterscheiden sich meist drastisch von herkömmlichen Polymeren aufgrund des Fehlens einer kontinuierlichen Wiederholeinheit sowie einem hohen Grad der Vernetzung. Grund hierfür ist das Vorkommen einer Vielfalt an reaktiven Spezies im Plasma und einer daraus folgenden geringeren Selektivität im Vergleich zu herkömmlichen Synthesewegen. Grundbedingung für die Nutzung potentieller Monomere ist das Verbringen der meist flüssigen Vorläufer in die Gasphase unter den gewählten Reaktionsbedingungen.

So wird in der DE 603 04 163 T2 eine Oberflächenmodifikation durch Plasmapolymerisation beschrieben, wodurch eine Oberfläche, die ungleichmäßig ist und lokale Oberflächenbereiche definiert, hergestellt wird. Diese Oberfläche weist eine erhöhte Affinität für biologische Moleküle, die der Oberfläche ausgesetzt sind, auf. Dies wird dadurch erreicht, dass ein Teil des Plasmas durch eine Öffnung abgezogen wird. Alternativ kann ein Plasma an der Spitze oder in einer Mikrokapillare angeregt werden.

Aufgabe der vorliegenden Erfindung ist es einen Träger zur Immobilisierung von Nukleinsäuren bei gleichzeitiger Minimierung unspezifischer Bindungen von Proteinen sowie ein Verfahren zu dessen Herstellung zur Verfügung zu stellen.

Die Aufgabe der Erfindung wird jeweils eigenständig durch einen Träger mit einer Beschichtung, wobei die Beschichtung zumindest bereichsweise Freiräume zur Aufnahme einer Lösung aufweist, und einem Verfahren, wobei die Beschichtung zumindest bereichsweise mit Freiräumen zur Aufnahme der Lösung erzeugt wird, gelöst.

Als Freiräume im Zusammenhang der Erfindung werden sowohl zwei- als auch dreidimensionale Strukturen verstanden, die eine hohe Bindungskapazität für Nukleinsäuren bei gleichzeitig minimierter Proteinanbindung aufweisen. Entscheidend für diese Wirkungsweise ist sowohl die Strukturgebung mittels der Synthesebedingungen, die in einer porösen, quellbaren Matrix resultiert, als auch polare aprotische chemische Funktionseinheiten zur Unterstützung der Proteinabweisung verbunden mit benachbarten polaren chemischen Bausteinen zur selektiven Immobilisierung von Nukleinsäuren. Der Vorteil der funktionellen, porösen, quellbaren Matrix ist bei der Immobilisierung der Nukleinsäuren die Kombination aus a) geeigneter chemischer Bindungspartner in der funktionellen Schicht mit b) der Erhöhung der Bindungskapazität aufgrund des Eindringens des Bindungspartners in die Schicht und somit auch der Immobilisierung in der Schicht und nicht nur auf der Schicht und c) der Optimierung der Immobilisierungsrate aufgrund der verzögerten Verdunstung und somit verlängerten Reaktionszeit der Lösungen aus der Matrix. Der Vorteil der funktionellen, porösen, quellbaren Matrix ist bei der Proteinabweisung die Kombination der Ausbildung der Hydratschicht des Nanogels bei Kontakt mit Pufferlösungen mit beinhalteten aprotischen Synthesebausteinen, welche keine Proteinbindung eingehen. Somit wird mit der Erfindung ein synergistischer Effekt bei verbesserter DNA-Bindung und gleichzeitiger Proteinabweisung erzielt.

Als Lösung wird im Zusammenhang der Erfindung eine Flüssigkeit verstanden, die in der Lage ist mit den funktionellen Gruppen der plasmagenerierten dünnen Schichten zu interagieren. Hierunter wird beispielsweise eine Flüssigkeit enthaltend DNA, RNA, PNA, LNA, etc. verstanden.

Die so generierte Schicht kann für alle Anwendungen von Vorteil sein, die Nukleinsäuren, wie DNA, RNA, PNA, LNA oder eine Mischform davon, binden wollen und dabei gleichzeitig die Anbindung von Proteinen, wie z.B. Enzyme, Antikörper, Antigene, minimiert. Dies ist bei sehr vielen Nachweisreaktionen der Fall, die Nukleinsäuren als Fängersonden einsetzen. Am häufigsten genutzte Enzyme sind Meerrettichperoxidase (HRP), Glucose-Oxidase oder Alkali-Phosphatase, wobei diese sowohl für colorimetrische als auch chemolumineszenz- und fluoreszenz- Nachweisreaktionen eingesetzt werden. Im Analysenverlauf werden zuerst Analyten, die mit einem Hapten, wie z. B. Biotin, Antigen, markiert sind, an z.B. DNA-Sonden hybridisiert. Anschließend wird gewaschen und ein Enzym, das mit einem zum Hapten komplementären Fängermolekül, z.B. Streptavidin, Antikörper, gekoppelt ist, an den Analyt-Sonden Komplex gebunden. Nach einem weiteren Waschschritt wird das Enzym Substrat zugegeben und das Reaktionsprodukt detektiert. Somit kann auf vorteilhafte Weise erzielt werden, dass nur jene Moleküle, die einen Bindungspartner mit einer spezifischen Bindungsstelle finden, am Träger adhärieren und keine Signale durch unspezifische Anlagerungen von für die Nachweis- und Detektionsreaktion erforderlichen Reaktanden gebildet werden.

Die Freiräume bzw. Hohlräume können sich sowohl in zwei- als auch in dreidimensionaler Richtung erstrecken. Es kann dadurch eine Netzstruktur gebildet werden. Vorzugsweise weist die Beschichtung eine dreidimensionale Struktur auf und bildet eine dreidimensionale Matrix bzw. wird durch die Beschichtung eine dreidimensionale Struktur gebildet, wodurch die Anbindung von Proteinen weitestgehend verhindert wird.

Weiters zeigt sich von Vorteil, dass mit dem erfindungsgemäßen Träger, der eine quellbare Beschichtung aufweist bzw. mit dem Verfahren, wobei als Beschichtung ein zumindest bereichsweise quellfähiges Plasmapolymerisat erzeugt wird, eine wirtschaftliche Oberflächenfunktionalisierung zur Generierung funktioneller Schichten zur Verfügung gestellt wird, weil durch die kostengünstige Veredelung des Substrates herkömmliche Basismaterialien mit neuartigen Eigenschaften ausgerüstet werden und somit neue Applikationen erschlossen werden können.

Die quellbare Schicht kann eine Hydratschicht aufweisen bzw. kann sich eine Hydratschicht nach Aufbringen eines vorwiegend wässrigen Mediums bilden, wodurch die hohe Bindungskapazität für Nukleinsäuren bei gleichzeitig minimierter Proteinanbindung erzielt wird und somit eine Reaktionsoptimierung in Hinblick auf Sensitivität, Hintergrund und auch Probenverbrauch darstellt.

Die gebildete Beschichtung weist Kontaktwinkel aus einem Bereich mit einer unteren Grenze von 35° und einer oberen Grenze von 65° mit Wasser als Messflüssigkeit auf, wodurch sich ein bei Kontakt mit Reaktionslösungen in einem für quellbare Materialien charakteristisches Verhalten zeigt. Beim Aufbringen der Probe auf den Träger bildet sich kurzzeitig eine stationäre Phase eines auf der hydrophilen Oberfläche sitzenden Tropfens, der anschließend rasch in die Oberfläche eindiffundiert.

Es ist vorgesehen, dass die Beschichtung eine Dicke ausgewählt aus einem Bereich mit einer unteren Grenze von 4 nm, vorzugsweise 10 nm, und einer oberen Grenze von 300 nm, vorzugsweise 40 nm, aufweist. Zudem ist die gebildete Beschichtung defektfrei, vernetzt und langzeitstabil und beeinträchtigt nicht die geforderten Hauptcharakteristika der prozessierten Substrate, wie beispielsweise Transparenz oder Lösungsmittelbeständigkeit.

Das Material des Substrats des Trägers ist aus Kunststoff, aus einer Gruppe umfassend ein kohlenstoff- oder siliziumbasiertes Polymer, aus einer Gruppe umfassend Polystyrol (PS), Polyethylen (PE), Polyethylenterephthalat (PET, PETP, PBTP), Polypropylen (PP), Polyvinylchlorid (PVC), Polyamide, Nitrozellulose, Polymethylmetacrylat (PMMA), Styrolacrylnitril (SAN), Polycarbonat (PC), Cycloolefin-Copolymere (COC) wie Cyclopenten-Polyetheylen-Copolymer, Cyclohexan-Polyetheylen-Copolymer, Cyclohepten-Polyetheylen-Copolymer sowie Cycloolefin-Polymere (COP) oder dgl., Ditanalpentoxid, Glas, Metall bzw. Kombinationen daraus, gebildet, wodurch aus dem Stand der Technik bekannte als auch neue Materialien mit Eigenschaften ausgerüstet werden können, die-eine Bindung von Nukleinsäuren unter gleichzeitig keiner bzw. minimaler Proteinbindung zulassen. Besonders vorteilhaft zeigen sich auch Materialhybride aus Kunststoff und Glas.

Das Substrat kann auch als Membran ausgebildet sein, womit eine Vielfalt von Trägern modifiziert werden kann. Zudem ist das zu beschichtende Substrat nicht auf planare Grundkörper beschränkt, sondern es können auch strukturierte bzw. poröse Oberflächen beschichtet werden.

Weiters ist vorgesehen, dass die Einzelbausteine von zumindest einer Monomerspezies gebildet sind, wobei durch die Verwendung einer Spezies der Ausgangsverbindung bei Bedarf eine möglichst einheitliche Beschichtung erzielt werden kann. Die Einzelbausteinzugabe führt zur Plasmapolymerbildung.

Die Monomerspezies ist aus einer Gruppe umfassend Amine, Amide, Dialkyloxyethan ausgewählt, wobei die jeweilige Monomerspezies Reste aus einer Gruppe umfassend H, Alkyl oder Aryl aufweisen kann, wodurch eine Beschichtung mit optimalen Eigenschaften zur Bindung von Nukleinsäuren bei gleichzeitig minimierter Proteinbindung erzielt wird. Als Reste R können H, Alkyl, Aryl dienen, wobei vorzugsweise Reste mit 1 bis 8 Kohlenstoffatomen, insbesondere 1 bis 3 Kohlenstoffatomen, verwendet werden:

Vor oder während der Plasmapolymerisation kann eine Aktivierung der Oberfläche des Substrats im Plasma durchgeführt werden, wobei die Syntheseführung der Plasmapolymerisation ohne eine Vorbehandlung in einer guten Nukleinsäurebindungsfähigkeit bei gleichzeitiger Proteinabweisung resultiert. Auf vorteilhafte Weise wird mittels einer zweistufigen Synthese, bestehend aus Plasmabehandlung zur Aktivierung gefolgt von einer Plasmapolymersiation, eine Schicht abgeschieden, welche in der Lage ist, die bisherigen Limitierungen hinsichtlich Wirtschaftlichkeit und somit Nutzbarkeit in der medizinischen Diagnostik, der Bindungsfähigkeit von DNA kombiniert mit der gleichzeitigen Minimierung der unspezifischen Bindung von Proteinen zu überwinden. Die Performance bei einem zweistufigen Prozess ist deutlich besser. Durch eine vorgeschaltete Aktivierung können auch Verunreinigungen des Substrats bzw. an der Oberfläche des Substrats eliminiert werden.

Die Aktivierung kann mit einem Reaktionsgemisch umfassend ein Trägergas und ein Reaktionsgas in einem Reaktor durchgeführt wird, wobei das Trägergas ein Inertgas und das Reaktionsgas ausgewählt aus einer Gruppe umfassend Sauerstoff, Ammoniak, H₂, N₂, CO₂, C₂H₂, ist, womit kostengünstige Gase zur wirtschaftlichen Produktion plasmapolymerisierter Oberflächen verwendet werden können.

In einer Weiterbildung ist vorgesehen, dass zwischen der Aktivierung und der Plasmapolymerisation ein Spülgas, vorzugsweise eine Inertgas, dem Reaktor, insbesondere der Reaktionskammer, zugeführt wird, wodurch beispielsweise die Plasmapolymerisation störende Produkte aus der Reaktionskammer abtransportiert werden. Durch die Aktivierung der Substrate mittels Träger- und Reaktionsgase, wie z.B. O₂/Ar oder NH₃/Ar Plasmen, bei höherer Leistungseinkopplung werden auch Bindungsstellen generiert.

Die Aktivierung und/oder Plasmapolymerisation kann bei einer Leistungseinkopplung aus einem Bereich mit einer unteren Grenze von 0, 1 W, vorzugsweise 2 W, insbesondere 5 W, und einer oberen Grenze von 2500 W, vorzugsweise 300 W, insbesondere 20 W, erfolgen. Bei einer zweistufigen Synthese erfolgt vorzugsweise die Aktivierung der Substrate bei einer 5- bis 20-fach, vorzugsweise 9- bis 18-fach höheren Leistungseinkopplung als bei der Plasmapolymerisation. Bei der zweistufigen Synthese erfolgt die Aktivierung vorzugsweise bei einer Plasmaleistung aus einem Bereich mit einer unteren Grenze von 2 W und einer oberen Grenze von 2500 W und die Plasmapolymerisation bei einer Plasmaleistung aus einem Bereich mit einer unteren Grenze von 0,1 W und einer oberen Grenze von 400 W durchgeführt wird. Der gewählte Leistungseintrag ermöglicht die Gewährleistung der größtmöglichen Beibehaltung der strukturellen und funktionellen Eigenschaften der Monomere.

Auch durch Bildung der Beschichtung durch gepulste Plasmen wird ermöglicht die strukturellen und funktionellen Eigenschaften der Monomere beizubehalten.

Die zumindest eine Monomerspezies kann flüssig oder gasförmig zugeführt werden, wobei die flüssigen Monomere direkt in den Reaktor eingespritzt werden können und unter den dort gegebenen Druckbedingungen in die Gasphase übergehen oder außerhalb verdampft und als Gas eindosiert werden. Eine Vorreinigung der Monomere mittels wiederholter vorgeschalteter Entgasungs-/Begasungs- oder Einfrier-/Entgasungszyklen ist nicht notwendig.

Der Druck während der Aktivierung und/oder Plasmapolymerisation ist aus einem Bereich mit einer oberen Grenze von 1,5 mbar, vorzugsweise 0,5 mbar, und einer unteren Grenze von 0,05 mbar, vorzugsweise 0,2 mbar, ausgewählt, wodurch optimale Druckverhältnisse für die Plasmapolymerisation gegeben sind.

Die Aktivierung wird für einen Zeitraum mit einer unteren Grenze von 1 min, vorzugsweise, 5 min, und einer oberen Grenze von 15 min, vorzugsweise 10 min, und/oder die Plasmapolymerisation für einen Zeitraum mit einer unteren Grenze von 1,5 min, vorzugsweise, 10 min, und einer oberen Grenze von 60 min, vorzugsweise 20 min, durchgeführt, wodurch optimale Ergebnisse bezüglich der Bindung von Nukleinsäuren bei gleichzeitige minimierter Proteinbindung erreicht werden.

Um die Entnahme des Trägers aus der Reaktionskammer zu erleichtern und die Geruchsbelästigung so gering wie möglich zu halten, wird der Reaktor, insbesondere die Reaktionskammer, nach der Polymerisation mit Luft gespült und die Kammer belüftet.

Im Nachfolgenden werden Ergebnisse zur Analyse des erfindungsgemäßen Gegenstands bzw. Verfahrens dargestellt:

Es zeigen:
- Fig. 1: FITR-Sprektrum eines gemäß Ausführungsbeispiel 1 beschichteten Cycloolefin-polymer Träger im Vergleich zu einem unbeschichteten Träger
- Fig. 2: ToF SIMS Analyse einer Tiefenprofilierung und Feststellung der Schichtdicke von Ausführungsbeispiel 1
- Fig. 3: Applikationsbeispiel einer POC-Diagnostik auf einem erfindungsgemäßen Träger
- Fig. 4: Vergleich der DNA-Immobilisierung von aus dem Stand der Technik bekannten funktionalisierten Oberflächen mit der erfindungsgemäß funktionalisierten Oberfläche
- Fig. 5: Vergleich der Bindungseigenschaften der erfindungsgemäß funktionalisierten Oberfläche mit einer unfunktionalisierten Oberfläche

Einführend sei festgehalten, dass in den unterschiedlich beschriebenen Ausführungsbeispielen gleiche Teile mit gleichen Bezeichnungen versehen werden, wobei die in der gesamten Beschreibung enthaltenen Offenbarungen sinngemäß auf gleiche Teile mit gleichen Bezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 2 bis 9 oder 4 bis 7 oder 5 bis 6.

Das Fassungsvermögen der Reaktionskammer für nachfolgend beschriebenes und das erfindungsgemäße Verfahren umfasst zwischen 0,01 m³ und 0,8 m³.

Die Plasmabehandlung der Substrate mittels O₂/Ar oder NH₃/Ar Plasmen bei höherer Leistungseinkopplung dient der Aktivierung mittels Generierung von Bindungsstellen. Die sofort anschließende Reaktandenzugabe der unten aufgeführten Substanzklassen I bis III führt zur Plasmapolymerbildung. Als Reste R können H, Alkyl, Aryl dienen, wobei die Reste einer Substanzklasse entweder gleich oder verschieden sein können. In der Substanzklasse I ist n vorzugsweise zwischen 1 und 5 ausgewählt, wobei durch n=1 sehr gute Ergebnisse erzielt werden.

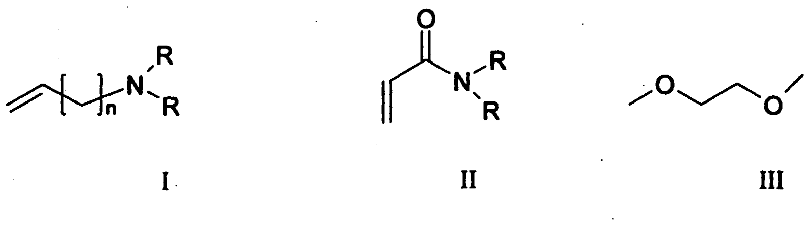

Zwischen dem Aktivierungsschritt und dem Polymerisationsschritt kann ein Spülgas (z. B. Argon) zur Entfernung der Reaktanden eingesetzt werden. In der bevorzugten Ausführung ist eine Reaktorspülung nicht notwendig.

Das zu beschichtende Substrat kann aus einem kohlenstoff- oder siliziumbasierten Polymer, Glas, Ditantalpentoxid, Metall oder auch Membranen bestehen und ist nicht auf planare Grundkörper beschränkt. Auch Kombinationen von Materialien sind prozessierbar.

Das Trägergas kann Argon oder ein anderes Inertgas sein; Reaktionsgase können Sauerstoff, Ammoniak, H₂, N₂, CO₂ oder ähnliche Vertreter sein.

Die Plasmaleistung erstreckt sich bevorzugt auf den Bereich von 0,1 W bis 2500 W, vorzugsweise 2 W bis 300 W, in besonders bevorzugter Ausführung von 5 W bis 20 W.

Plasmaquellen, wie aus dem Stand der Technik bekannt, können genutzt werden.

Die flüssigen Monomere können direkt in den Reaktor eingespritzt werden oder als Aerosole eingebracht werden und unter den dort gegebenen Druckbedingungen in die Gasphase übergehen oder außerhalb verdampft und als Gas eindosiert werden. Eine Vorreinigung der Monomere mittels wiederholter vorgeschalteter Entgasungs-Begasungs- oder Einfrier-/Entgasungszyklen ist nicht notwendig.

Die Druckbereiche während der Polymersiation liegen bevorzugt zwischen 0,05 mbar und 1,5 mbar, in einer bevorzugten Ausführung zwischen 0,2 mbar und 0,5 mbar.

Die Schichtabscheidung resultiert abhängig vom Grundkörper in einer hydrophilen Oberfläche mit bevorzugten Kontaktwinkelbereichen von 35° bis 65° mit Wasser als Messflüssigkeit.

Die Reaktionszeit der Aktivierung kann im Bereich von 1 min bis 15 min liegen; in bevorzugter Ausführung im Bereich von 5 min bis 10 min.

Die Reaktionszeiten der Plasmapolymerisation liegen im Bereich von 1,5 min bis 60 min und in einer bevorzugten Ausführung im Bereich von 10 min bis 20 min.

Die Schichtdicke der Plasmapolymere beträgt 4 nm bis 300 nm, in bevorzugter Ausführung 10 nm bis 40 nm.

Nach der Polymerisation wird die Reaktionskammer für einen Zeitraum von 1 min bis 5 min mit Luft gespült, die Kammer belüftet und die beschichteten Grundkörper entnommen.

Abhängig von der Dimensionierung des Reaktors bzw. der Reaktionskammer kann es erforderlich sein, die oben angeführten Werte entsprechend auf die gewählte Dimensionierung anzupassen, was im routinemäßigen Ernessens des Fachmanns liegt.

Die resultierenden Schichten zeichnen sich bei Kontakt mit Reaktionslösungen in einem für quellbare Materialien charakteristischen Verhalten aus, indem sich bei Tropfenaufgabe kurz (1-2 sec) eine stationäre Phase eines auf der Oberfläche sitzenden Tropfens bildet, der im Anschluss schnell in die Oberfläche eindiffundiert. Dieses Quellen generiert eine Hydratschicht, die eine Adhäsion von Proteinen verhindert und bsp. für nasschemisch Polyethylenglykol (PEG) bzw. Polysaccharid versetzte Oberflächen gut dokumentiert ist (K. Emoto, Anal. Chem. 1996, 68, 3751 - C. Brink, Colloid Surf 1992, 66, 149 - Y.S. Lin, Colloids and Surf. B: Biointerfaces 1994, 3, 49 - E. Uchida, Langmuir 1994, 10, 481). Eine Mischung von PEG Derivaten mit Hydrophilic Lipophilic Balance Klassifizierungen zwischen 5 und 8 mit Basispolymeren, wie Polystyrol, ist in WO 1998/017407 A1 zur Erreichung einer Proteinabweisung dokumentiert.

### Ausführungsbeispiel 1:

Argon 5.6, NH₃ und N,N-Dimethylacrylamid werden wie vom Hersteller, z.B. Aldrich, Fluca, bezogen eingesetzt. Grundkörper aus Polystyrol, Cycloolefinpolymer und Glas werden in der Reaktionskammer platziert und der Druck auf 0,1 mbar reduziert. Es erfolgt die Dosierung von Argon und NH₃ unter einer Druckeinstellung auf 0,5 mbar und die Leistungseinkopplung von 180 W für 10 min. Nach dem Stoppen des Aktivierungsprozesses wird der Druck auf 0, 1 mbar geregelt, durch Zugabe von Argon und N,N-Dimethylacrylamid auf 0,35 mbar erhöht und die Plasmapolymerisation bei einer Leistungsstufe von 15 W für 15 min durchgeführt.

### Ausführungsbeispiel 2:

Argon 5.6, NH₃ und N,N-Dimethylallylamin werden wie vom Hersteller bezogen eingesetzt. Grundkörper aus Polystyrol, Cycloolefinpolymer und Glas werden in der Reaktionskammer platziert und der Druck auf 0,1 mbar reduziert. Es erfolgt die Dosierung von Argon und NH₃ unter einer Druckeinstellung auf 0,5 mbar und die Leistungseinkopplung von 100 W für 10 min. Nach dem Stoppen des Aktivierungsprozesses wird der Druck auf 0,1 mbar geregelt, durch Zugabe von Argon und N,N-Dimethylallylamin auf 0,5 mbar erhöht und die Plasmapolymerisation bei einer Leistungsstufe von 15 W für 20 min durchgeführt.

### Ausführungsbeispiel 3:

Argon 5.6, NH₃ und N,N-Dimethylallylamin werden wie vom Hersteller bezogen eingesetzt. Grundkörper aus Polystyrol, Cycloolefinpolymer und Glas werden in der Reaktionskammer platziert und der Druck auf 0,1 mbar reduziert. Es erfolgt die Dosierung von Argon und NH₃ unter einer Druckeinstellung auf 0,5 mbar und die Leistungseinkopplung von 1700 W für 10 min. Nach dem Stoppen des Aktivierungsprozesses wird der Druck auf 0,1 mbar geregelt, durch Zugabe von Argon und N,N-Dimethylallylamin auf 0,5 mbarerhöht und die Plasmapolymerisation bei einer Leistungsstufe von 200 W für 20 min durchgeführt.

### Ausführungsbeispiel 4:

Argon und Dimethoxyethan werden wie vom Hersteller bezogen eingesetzt. Grundkörper aus Polystyrol, Cycloolefinpolymer und Glas werden in der Reaktionskammer platziert und der Druck auf 0,1 mbar reduziert. Es erfolgt die Dosierung von Argon und Dimethoxyethan unter einer Druckeinstellung auf 0,6 mbar und die Leistungseinkopplung von 6 W für 40 min.

Durch die hergestellten Freiräume ist die Proteinabweisung von erfindungsgemäß hergestellten Oberflächen um ein vielfaches höher als bei herkömmlich hergestellten, wie beispielesweise im Stand der Technik, beschriebenen Oberflächen. Die Bindungseigenschaften der funktionalisierten Oberfläche werden mit Hilfe eines kompetitiven ELISA Tests überprüft, wobei sich eine um den Faktor 10 niedrigere Bindungseigenschaft für erfindungsgemäße Oberflächen im Vergleich zu herkömmlichen Oberflächen nachweisen lässt.

Weiters konnte eine verbesserte DNA Immobilisierung der aus den erfindungsgemäßen Verfahren resultierenden Schichten gezeigt werden, wodurch einerseits der Nukleinsäureverbrauch der zu immobilisierenden Sonden und andererseits der Probenverbrauch sinken. Die Bindungskapazität für DNA ist um mindestens 40 % höher als bei unfunktionalisierten oder aus dem Stand der Technik bekannten funktionalisierten Oberflächen.

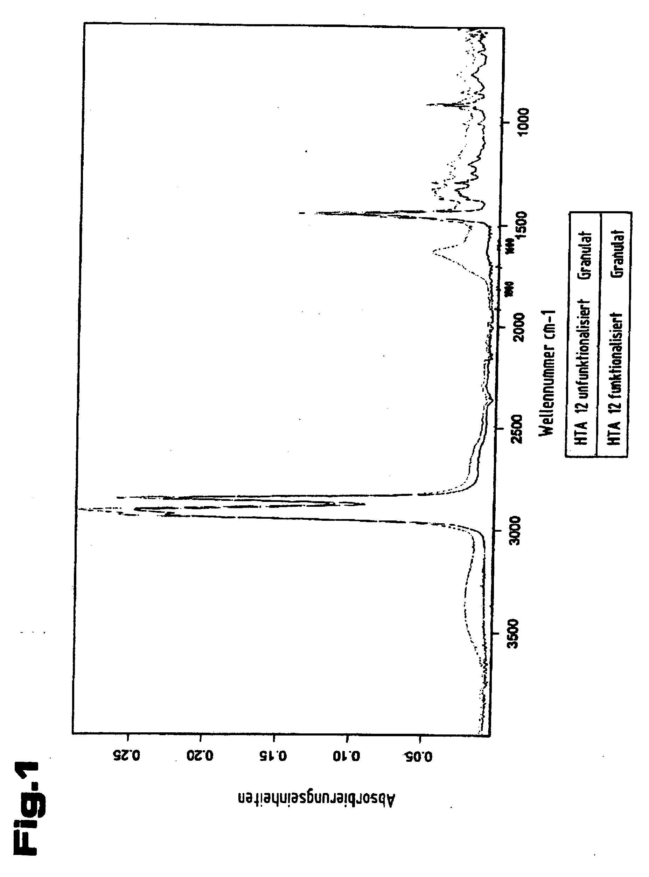

Das weitgehend intakte Strukturmotiv C(=O)N ist anhand der für Amide charakteristischen Carbonylbande bei 1680 cm⁻¹ nachweisbar, wie im FITR Spektrum in Fig. 1 gezeigt wird, wobei der Peak bei 1680 cm⁻¹ aus der erfindungsgemäßen funktionalisierten Oberfläche des Trägers resultiert, wohingegen unfunktionalisierte Oberflächen keinen Peak bei 1680 cm⁻¹ zeigen.

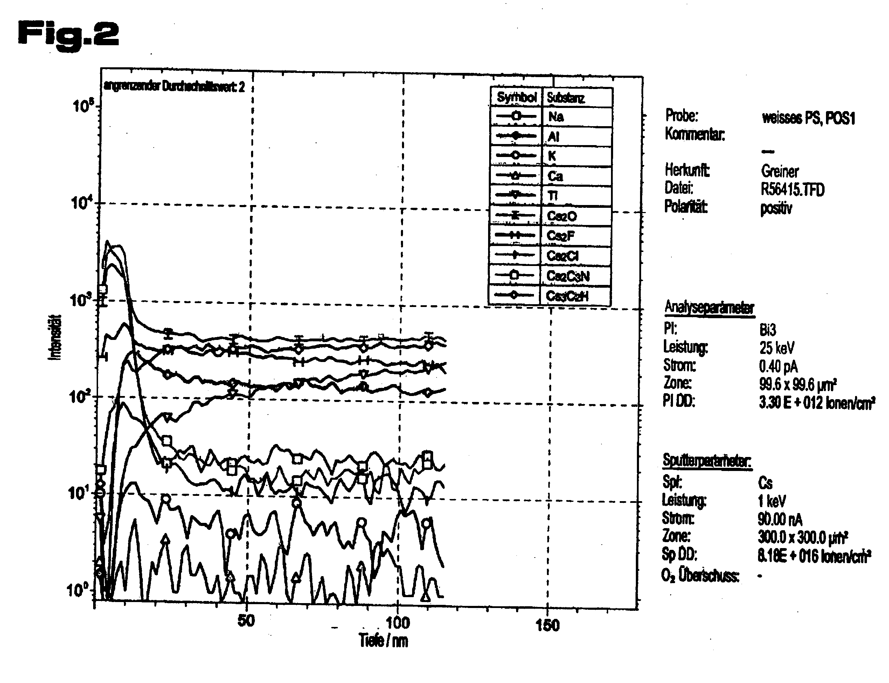

Eine Tiefenprofilierung und Feststellung der Schichtdicke anhand der chemischen Schichtzusammensetzung mittels ToF SIMS liefert in der bevorzugten Ausführung des Beispieles 1 eine Schichtdicke von ca. 11 nm, wie in Fig. 2 dargestellt ist. Zur Ermittlung der Elementverteilung als Funktion der Tiefe werden Tiefenprofile erstellt. Bei der ToF-SIMS Tiefenprofilierung im so genannten "Dual-Beam-Mode" wird die Probenoberfläche mit einem Ionenstrahl (hier: Cs+) kontinuierlich zerstäubt, während ein zweiter Ionenstrahl (hier: Bi3+) zur Charakterisierung der chemischen Zusammensetzung des so entstandenen Kraterbodens verwendet wird. Die zur Profilierung erforderliche massive Zerstäubung verursacht Schädigungen des Festkörpermaterials, so dass bei dieser Analyseart zumeist nur die Verteilung von Elementen als Funktion der Tiefe erfasst werden kann.

Auch Ergebnisse aus XPS Untersuchungen an Proben der Ausführungsbeispiele zeigen eine deutlich veränderte Zusammensetzung im Vergleich mit unbeschichteten Referenzen. Für die Messungen wurde ein PHI Quantera SXP Gerät verwendet: Anregungsstrahlung: AlKα; Analysespot: 200 x 200 µm².

In der nachfolgenden Tabelle 1 wird der Vergleich der Elementkonzentrationen in Atomprozent von transparentem und weißem Polystyrol (PS) angeführt und zusätzlich die Konzentrationsverhältnisse angegeben. Die Ergebnisse für beide Proben sind einander sehr ähnlich. Insgesamt werden in den obersten ca. 10 nm der Proben 11,6 Atomprozent (At%) N und 13,7 At% O (transparentes Polystyrol) bzw. 15,8 At% N und 16,6 At% O (weißes Polystyrol) gefunden.

**Tab.: 1 : Elementkonzentrationen in Atomprozent Konzentrationsverhältnisse**

| | C | O | N | C/O | C/N |
|---|---|---|---|---|---|
| PS, transparent | 74.7 | 13.7 | 11.6 | 5.4 | 6.4 |
| PS, weiß | 67.7 | 16.6 | 15.8 | 4.1 | 4.3 |

Nachfolgende Tab. 2 zeigt die prozentualen Anteile der chemischen Verschiebungen des C 1s Peaks; (C1s aliphatisch/aromatisch: 284,8 eV; C-O/C-N: 286,2 eV; C=/O-C-O: 287,5 eV)

Der Sauerstoff O 1s-Peak wird bei 531 eV gefunden (entsprechend O-C-Bindungen) und der N 1s-Peak bei 399,5 eV (entsprechend N-C-Bindungen).

Vergleicht man die beiden Tabellen, so kann man schließen, dass ca. 33% des Kohlenstoffs (entsprechend 24 At%) sind nicht als C-C gebunden sind. Bei 13 At% O und 11 At% N können daher praktisch kaum Bindungen von C zu 2 Sauerstoffen vorhanden sein. Somit ist das C(=O)N Strukturmotiv auch nach der Plasmapolymerisation weiterhin bestimmend und eine Fragmentierung des Monomers weitgehend ausgeschlossen.

**Tab. 2: prozentuale Anteile der chemischen Verschiebungen des C 1s Peaks**

| | C-C/C-H aliphatisch/aromatisch | C-O/C-N | C=O/O-C-O |
|---|---|---|---|
| PS, transparent | 67 | 20 | 13 |
| PS, weiß | 68 | 16 | 16 |

Das Vorhandensein einer modifizierten Oberflächenschicht kann somit durch unterschiedliche Analysen bestätigt werden.

Die erfindungsgemäßen Träger können beispielsweise für Arraysysteme zum Nachweis von Analyten oder für mikrofluidische Strukturen verwendet werden. Typische Anwendungsmöglichkeiten sind Nukleinsäure-Hybridisierungarrays mit Signalerzeugung, wobei hier mit aus dem Stand der Technik bekannten Methoden ein Blockierungsschritt, der die proteinbindenden Stellen der Oberfläche des Trägers mit einer nicht-proteinbindenden Schicht bedeckt, durchgeführt werden muss, weil sonst ein Signal durch den Hintergrund resultieren würde. Dieser Blockierungsschritt entfällt durch den erfindungsgemäßen Träger.

Durch die Erhöhung der Nukleinsäurebindungskapazität an die Oberfläche des erfindungsgemäßen Trägers kann auch eine Verbesserung der Empfindlichkeit von Nukleinsäure-Hybridisierungsassays erreicht werden und somit die Nachweisgrenze verbessert werden.

Auch für Immunoassays eignet sich der erfindungsgemäße Träger, weil es zu keiner unspezifischen Bindung von Proteinen an die Oberfläche kommt und dadurch ein störender Hintergrund für das Signal verhindert werden kann.

Durch das erfindungsgemäße Verfahren können auch Oberflächen, insbesondere Kunststoff oberflächen hydrophilisiert werden, sodass ein Transport von Proben in Mikrokanälen ermöglicht wird. Das Verfahren erlaubt die Modifikation von Oberflächen mit Vertiefungen, wodurch es sich auch für strukturierte Oberflächen eignet.

### Potentielle Applikationsgebiete in der Point of Care (POC)-Diagnostik

Als bislang dominierende Technik in POC-Anwendungen ist der sogenannte Lateral Flow Assay (LFA) zu nennen. Die LFA basieren auf dem gleichen Prinzip wie andere immunologische Assays (ELISA, Magnetic Bead Assays usw.), indem sie den Effekt der Antikörper-Antigen-Reaktion ausnützen. Zusätzlich haben sie chromatographische Eigenschaften, da die Antikörper auf einer Membran gebunden sind. Die zu analysierende Probe (Lösung) wird durch die Kapillarkräfte über den ganzen Strip gezogen und führt zu einem schnell sichtbaren Resultat. Aus den erwähnten Gründen wird der LFA auch als Immuno-Chromatographie bezeichnet. Die Probe wird von einer Probenunterlage aufgenommen, welche Verunreinigungen (Schmutzpartikel) von der Probe abtrennt. Unter der Probenunterlage liegt die Konjugat-Unterlage, in dem sich das Konjugat (primärer Antikörper) befindet. Dabei handelt es sich um gegen den zu messenden Analyten (z.B. Ricin) gerichtete Antikörper, die an kolloidales Gold gebunden sind. Auf der Konjugat-Unterlage reagiert der Analyt, wenn er in der Probe enthalten ist, mit dem am kolloidalen Gold gebundenen Antikörper. Danach strömt die Probe auf die Nitrozellulosemembran. Dort sind hintereinander zwei Zonen aufgetragen. Bei der ersten. Zone handelt sich um einen sekundären Antikörper, der gegen den Analyten gerichtet ist und ein zum Konjugat unterschiedliches Epitop (Erkennungsstelle des Antikörpers) erkennt. Die andere Linie enthält einen Anti-spezies-Antikörper, der mit dem nicht gebundenen Konjugat reagiert. Die überschüssige Flüssigkeit mit den an der Test- bzw. Kontrolllinie nicht gebundenen Goldpartikeln strömt weiter durch das Membransystem, bis sie von einem Filterpapier aufgesaugt wird und somit einen Rückfluss verhindert. Nitrozellulosemembranen sind für einen LFA die mit am besten geeigneten Membranen. Die Eigenschaften des Nitrozellulasepolymers zusammen mit der Mikroporenstruktur machen die Membran zu einem idealen Trägermaterial für die meisten Lateral Flow Assays. Eine gute Membran besitzt folgende Eignenschaften: (i) hohe Bindungskapazität, (ii) definierte und präzise Kapillargeschwindigkeit, (iii) gleichmäßige Membranoberfläche, welche frei von Staub und Defekten ist, (iv) gleichmäßige Dicke der Membran, (v) gleichmäßige Qualität zwischen den verschiedenen Chargen. Vorteilhaft bei der Anwendung des erfindungsgemäßen Trägers gegenüber dem LIF-Assay zum Stand der Technik erweist sich, dass (i) kein Einsetzen einer "externen" Membran notwendig ist, (ii) keine Beladung u.a. mit Goldkonjugaten erforderlich ist, (iii) die Fluidik den Flüssigkeits- und Stofftransport ermöglicht und (iv) die Oberflächenchemie eine gute Immobilisierung mit geringer unspezifischer Bindung gewährleistet (ggf. kein weiterer Arbeitsschritt der Absättigung notwendig).

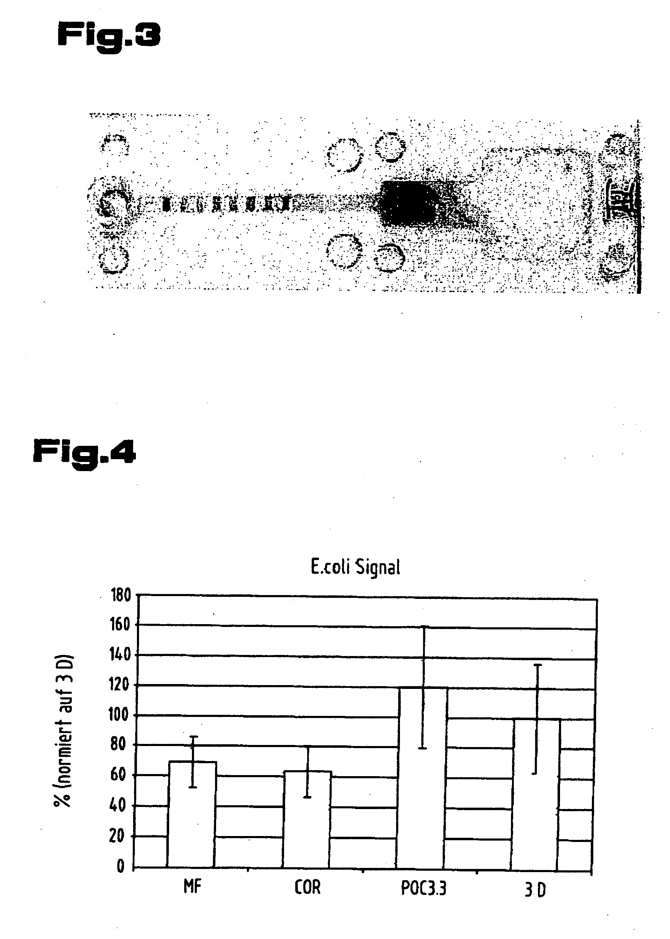

In Fig. 3 wird ein Beispiel einer POC-Anwendung mit einer erfindungsgemäßen funktionellen Oberfläche illustriert, deren Aufbau im Folgenden skizziert wird:

Nach der Immobilisierung von spezifischen DNA-Sonden wird eine Hybridisierung mit einer komplexen Probe durchgeführt. Die immobilisierten DNA-Sequenzen werden mit einem Hybridisierungspuffer in Kontakt gebracht, der ggf. die komplementären Sequenzen der Sonden enthält. An diesen ist über ein konjugiertes Protein das Enzym Meerrettichperoxidase (Horseradish peroxidase, HRP) gebunden. Dieses Enzym gehört zu der Gruppe der Peroxidasen und katalysiert somit die Oxidation in Gegenwart eines Peroxids. So wird Tetramethylbenzidin in Gegenwart von Wasserstoffperoxid von der farblosen reduzierten Form (TMBH2) in die blaue oxidierte Form (TMB) überführt.

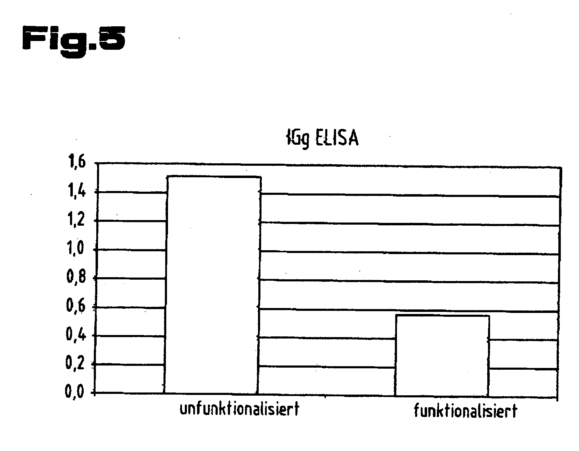

Diese enzymatische Farbreaktion liegt der hier verwendeten neuen Detektionsmethode zu Grunde. Nach Zugabe von TMB und Wasserstoffperoxid erfolgt nach Hybridisierung die Farbreaktion mit einem blauen Farbniederschlag. Auf diese Weise kann das System als Nachweis der Hybridisierung verwendet werden. Das qualitative Ergebnis des Assays kann mit bloßem Auge beurteilt werden (Fig.3). Durch Scannen der Assays und einer anschließenden Auslesung in Graustufen kann die Intensität des Niederschlags ausgewertet werden. Es können auf diese Weise Rückschlüsse über die Immobilisierungsdichte, die Bindungskapazität und die Zugänglichkeit der Sonden gezogen werden (Fig.4). Diese sind abhängig von den Immobilisierungseigenschaften der Oberfläche. Die minimierte unspezifische Proteinbindung wird in einem zusätzlichen Experiment (Fig. 5) verdeutlicht.

Fig. 3 zeigt ein Applikationsbeispiel der Point of Care-Diagnostik mit Identifizierung spezifischer Sequenzen aus einer komplexen Probe bei Minimierung unspezifischer Proteinbindung. Die farbigen Banden weisen die spezifische Immobilisierung von DNA in der Probe mit einer diagnostisch relevanten Sensitivität nach. Der ungefärbte Bereich zwischen den Banden weist eine minimierte unspezifische Bindung nach.

Fig. 4 zeigt die Signalstärke der DNA-Immobilisierung von Fig. 3 im Vergleich mit herkömmlichen Wegen der Oberflächenfunktionalisierung (MF = Photochemische funktionalisierte Oberfläche mittels chinoider Systeme; COR = Niederdruckplasma; 3 D = dendritische Strukturmotive zur Oberflächenvergrößerung und maximaler Bindungskapazität - derzeit der Goldstandard). Die POC3.3-Oberfläche ist eine erfindungsgemäße Oberfläche und schneidet im Vergleich mit anderen Funktionalisierungsmethoden erfolgreich ab.

Fig. 5 zeigt das Ergebnis einer Untersuchung der Bindungseigenschaften der erfindungsgemäß funktionalisierten Oberfläche mit Hilfe eines kompetitiven ELISA-Tests. Ein ELISA (Enzyme-Linked Immunosorbent Assay) oder EIA (Enzymgekoppelter Immunadsorptionstest) basiert auf einer enzymatisch ausgelösten Farbreaktion. Mit Hilfe dieses Tests können Biomoleküle, wie zum Beispiel Peptide, Proteine, Viren, Hormone oder Toxine nachgewiesen werden. Über Nacht wird das Antigen (Human IgG) auf der Oberfläche adsorptiv immobilisiert. Die Lösung mit überschüssigem Antigen wird in einem ersten Waschschritt entfernt.

Die anschließende immunchemische Reaktion erfolgt nach dem Kompetitionsprinzip. Markierte und unmarkierte Antikörper konkurrieren um die freien Bindungsstellen an den immobilisierten Antigenen. Meerrettichperoxidase (HRP, Horseradish peroxidase) dient hier als Markerenzym. Durch einen zweiten Waschschritt werden überschüssige, ungebundene Antikörper entfernt. Das im folgenden Schritt zugegebene Substrat Tetramethylbenzidin (TMB) wird durch das Enzym HRP gespalten und setzt dabei einen türkis-blauen Farbstoff frei. Die Farbreaktion wird mit Schwefelsäure abgestoppt und fixiert (Farbumschlag nach gelb). Die Intensität der Farbreaktion wird mit einem Photometer über die Absorption gemessen und gibt so Aufschluss über das Bindungsverhalten der untersuchten Oberfläche. Hohe Absorption bedeutet hierbei hohe Anzahl an gebundenen Antigenen und umgekehrt. Hierbei kann nachgewiesen werden, dass im Vergleich mit unfunktionalisierten Grundkörpern eine signifikante Reduktion der Proteinanhaftung stattfindet.

Die Ausführungsbeispiele zeigen mögliche Ausführungsvarianten zur Herstellung des erfindungsgemäßen Trägers, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrunde liegende Aufgabe kann der Beschreibung entnommen werden.

## Patentansprüche

1. Verfahren zur zumindest bereichsweisen Modifikation einer Oberfläche eines Trägers aus zumindest einem Substrat durch Abscheiden einer Beschichtung mittels Plasmapolymerisation, wobei die Beschichtung zumindest bereichsweise mit Freiräumen zur Aufnahme zumindest einer Lösung erzeugt wird indem vor oder während der Plasmapolymerisation eine Aktivierung der Oberfläche des Substrats im Plasma durchgeführt wird und zumindest bereichsweise ein quellfähiges Plasmapolymerisat erzeugt wird sowie durch die Beschichtung eine dreidimensionale Struktur gebildet wird, **dadurch gekennzeichnet, dass** bei der Aktivierung eine um das 5- bis 20-fach höhere Leistungseinkopplung als bei der Plasmapolymerisation durchgeführt wird.

2. Verfahren nach Anspruch 1, **dadurch gekennzeichnet, dass** die Aktivierung mit einem Reaktionsgemisch umfassend ein Trägergas und ein Reaktionsgas in einem Reaktor durchgeführt wird, wobei das Trägergas ein Inertgas und das Reaktionsgas ausgewählt aus einer Gruppe umfassend Sauerstoff, Ammoniak, H₂, N₂, CO₂, C₂H₂, ist.

3. Verfahren nach Anspruch 1 oder 2, **dadurch gekennzeichnet, dass** zwischen der Aktivierung und der Plasmapolymerisation ein Spülgas dem Reaktor, insbesondere der Reaktionskammer, zugeführt wird.

4. Verfahren nach Anspruch 3, **dadurch gekennzeichnet, dass** das Spülgas ein Inertgas ist

5. Verfahren nach einem der Ansprüche 1 bis 4, **dadurch gekennzeichnet, dass** die Aktivierung und/oder Plasmapolymerisation bei einer Leistungseinkopplung aus einem Bereich mit einer unteren Grenze von 0,1 W und einer oberen Grenze von 2500 W erfolgt

6. Verfahren nach einem der Ansprüche 1 bis 5, **dadurch gekennzeichnet, dass** die Aktivierung und/oder Plasmapolymerisation bei einer Leistungseinkopplung aus einem Bereich mit einer unteren Grenze von 2 W, insbesondere 5 W, und einer oberen Grenze von 1700 W, insbesondere 300 W, erfolgt.

7. Verfahren nach einem der Ansprüche 1 bis 6, **dadurch gekennzeichnet, dass** die Aktivierung vorzugsweise bei einer Plasmaleistung aus einem Bereich mit einer unteren Grenze von 2 W und einer oberen Grenze von 2500 W und die Plasmapolymerisation bei einer Plasmaleistung aus einem Bereich mit einer unteren Grenze von 0,1 W und einer oberen Grenze von 400 W durchgeführt wird.

8. Verfahren nach einem der Ansprüche 1 bis 7, **dadurch gekennzeichnet, dass** die Beschichtung durch gepulste Plasmen abgeschieden wird.

9. Verfahren nach einem der Ansprüche 1 bis 8, **dadurch gekennzeichnet, dass** die Plasmapolymerisation durch Zugabe zumindest einer Monomerspezies durchgeführt wird.

10. Verfahren nach einem der Ansprüche 1 bis 9, **dadurch gekennzeichnet, dass** die Zugabe der zumindest einen Monomerspezies flüssig und/oder gasförmig erfolgt.

11. Verfahren nach einem der Ansprüche 1 bis 10, **dadurch gekennzeichnet, dass** der Druck während der Aktivierung und/oder Plasmapolymerisation aus einem Bereich mit einer oberen Grenze von 1,5 mbar, vorzugsweise 0,5 mbar, und einer unteren Grenze von 0,05 mbar, vorzugsweise 0,2 mbar, ausgewählt wird.

12. Verfahren nach einem der Ansprüche 1 bis 11, **dadurch gekennzeichnet, dass** die Aktivierung für einen Zeitraum mit einer unteren Grenze von 1 min, vorzugsweise, 5 min, und einer oberen Grenze von 15 min, vorzugsweise 10 min, durchgeführt wird.

13. Verfahren nach einem der Ansprüche 1 bis 12, **dadurch gekennzeichnet, dass** die Plasmapolymerisation für einen Zeitraum mit einer unteren Grenze von 1,5 min, vorzugsweise, 10 min, und einer oberen Grenze von 60 min, vorzugsweise 20 min, durchgeführt wird.

14. Verfahren nach einem der Ansprüche 1 bis 13, **dadurch gekennzeichnet, dass** der Reaktor, insbesondere die Reaktionskammer, nach der Polymerisation mit Luft gespült und die Kammer belüftet wird.

15. Verwendung eines Trägers aus zumindest einem Substrat, das zumindest bereichsweise eine durch Plasmapolymerisation von Einzelbausteinen hergestellte Beschichtung aufweist, die zumindest bereichsweise einen oder mehrere Freiräume zur Aufnahme zumindest einer Lösung aufweist, zumindest bereichsweise quellbar ist und zumindest bereichsweise eine dreidimensionale Struktur aufweist, wobei die quellbare Schicht eine Hydratschicht bildet, zur Immobilisierung von Nukleinsäuren bei gleichzeitiger Proteinabweisung.

16. Verwendung eines Trägers nach Anspruch 15, **dadurch gekennzeichnet, dass** die gebildete Beschichtung Kontaktwinkel aus einem Bereich mit einer unteren Grenze von 35° und einer oberen Grenze von 65° mit Wasser als Messflüssigkeit aufweist.

17. Verwendung eines Trägers nach Anspruch 15 oder 16, **dadurch gekennzeichnet, dass** die Beschichtung eine Dicke ausgewählt aus einem Bereich mit einer unteren Grenze von 4 nm, vorzugsweise 10 nm, und einer oberen Grenze von 300 nm, vorzugsweise 40 nm, aufweist.

18. Verwendung eines Trägers nach einem der Ansprüche 15 bis 17, **dadurch gekennzeichnet, dass** das Material des Substrats vorzugsweise aus Kunststoff, aus einer Gruppe umfassend ein kohlenstoff oder siliziumbasiertes Polymer, aus einer Gruppe umfassend Polystyrol (PS), Polyethylen (PE), Polyethylenterephthalat (PET, PETP, PBTP), Polypropylen (PP), Polyvinylchlorid (PVC), Polyamide, Nitrozellulose, Polymethylmetacrylat (PMMA), Styrolacrylnitril (SAN), Polycarbonat (PC), Cycloolefin-Copolymere (COC) wie Cyclopenten-Polyetheylen-Copolymer, Cyclohexan-Polyetheylen-Copolymer, Cyclohepten-Polyetheylen-Copolymer sowie Cycloolefin-Polymere (COP) oder dgl., Ditanalpentoxid, Glas, Metall bzw. Kombinationen daraus, gebildet ist.

19. Verwendung eines Trägers nach einem der Ansprüche 15 bis 18, **dadurch gekennzeichnet, dass** das Substrat als Membran ausgebildet ist.

20. Verwendung eines Trägers nach einem der Ansprüche 15 bis 18, **dadurch gekennzeichnet, dass** die Einzelbausteine von zumindest einer Monomerspezies aus einer Gruppe umfassend Amine, Amide, Dialkyloxyethan ausgewählt sind, wobei die Monomerspezies Reste aus einer Gruppe umfassend H, Alkyl oder Aryl aufweist.

21. Verwendung des Trägers nach einem der Ansprüche 15 bis 20 für Arraysysteme.

22. Verwendung des Trägers nach einem der Ansprüche 15 bis 21 für mikrofluidische Bauteile.

## Claims

1. Method of modifying at least certain regions of a surface of a carrier comprising at least one substrate by depositing a coating by means of plasma polymerisation, and the coating is created with free spaces in at least certain regions for accommodating at least one solution by activating the surface of the substrate in the plasma before or during plasma polymerisation, a swellable plasma polymerisate is created in at least certain regions and a three-dimensional structure is formed by the coating, **characterised in that** activation is conducted at a 5 to 20 times higher power input than the plasma polymerisation.

2. Method as claimed in claim 1, **characterised in that** activation takes place in a reactor by means of a reaction mixture containing a carrier gas and a reaction gas, and the carrier gas is an inert gas and the reaction gas is selected from a group comprising oxygen, ammonia, H₂, N₂, CO₂, C₂H₂.

3. Method as claimed in claim 1 or 2, **characterised in that** a flushing gas is fed through the reactor, in particular the reaction chamber, between activation and plasma polymerisation.

4. Method as claimed in claim 3, **characterised in that** the flushing gas is an inert gas.

5. Method as claimed in one of claims 1 to 4, **characterised in that** activation and/or plasma polymerisation takes place at a power input within a range with a lower limit of 0.1 W and an upper limit of 2500 W.

6. Method as claimed in one of claims 1 to 5, **characterised in that** activation and/or plasma polymerisation takes place at a power input within a range with a lower limit of 2 W, in particular 5 W, and an upper limit of 1700 W, in particular 300 W.

7. Method as claimed in one of claims 1 to 6, **characterised in that** activation is preferably conducted at a plasma power selected from a range with a lower limit of 2 W and an upper limit of 2500 W and plasma polymerisation is conducted at a plasma power selected from a range with a lower limit of 0.1 W and an upper limit of 400 W.

8. Method as claimed in one of claims 1 to 7, **characterised in that** the coating is deposited by means of pulsed plasmas.

9. Method as claimed in one of claims 1 to 8, **characterised in that** plasma polymerisation is conducted by adding at least one monomer species.

10. Method as claimed in one of claims 1 to 9, **characterised in that** the at least one monomer species is added in liquid and/or gaseous form.

11. Method as claimed in one of claims 1 to 10, **characterised in that** the pressure during activation and/or plasma polymerisation is selected from a range with an upper limit of 1.5 mbar, preferably 0.5 mbar, and a lower limit of 0.05 mbar, preferably 0,2 mbar.

12. Method as claimed in one of claims 1 to 11, **characterised in that** activation is conducted for a period with a lower limit of 1 min, preferably, 5 min, and an upper limit of 15 min, preferably 10 min.

13. Method as claimed in one of claims 1 to 12, **characterised in that** plasma polymerisation is conducted for a period with a lower limit of 1.5 min, preferably, 10 min, and an upper limit of 60 min, preferably 20 min.

14. Method as claimed in one of claims 1 to 13, **characterised in that** the reactor, in particular the reaction chamber, is flushed with air and the chamber vented after polymerisation.

15. Use of a carrier comprising at least one substrate with a coating in at least certain regions produced from individual modules by plasma polymerisation, which has one or more free spaces in at least certain regions for accommodating a solution, which is swellable in at least certain regions and has a three-dimensional structure in at least certain regions, and the swellable layer forms a hydrate layer for immobilising nucleic acids whilst simultaneously repelling proteins.

16. Use of a carrier as claimed in claim 15, **characterised in that** the resultant coating has contact angles within a range with a lower limit of 35° and an upper limit of 65° using water as the measuring fluid.

17. Use of a carrier as claimed in claim 15 or 16, **characterised in that** the coating has a thickness selected from a range with a lower limit of 4 nm, preferably 10 nm, and an upper limit of 300 nm, preferably 40 nm.

18. Use of a carrier as claimed in one of claims 15 to 17, **characterised in that** the material of the substrate is preferably made from plastic, selected from a group comprising a carbon-based or silicon-based polymer, from a group comprising polystyrene (PS), polyethylene (PE), polyethylene terephthalate (PET, PETP, PBTP), polypropylene (PP), polyvinylchloride (PVC), polyamides, nitrocellulose, polymethyl methacrylate (PMMA), styrene acrylonitrile (SAN), polycarbonate (PC), cyclo olefin copolymers (COC) such as cyclopentene-polyethylene copolymer, cyclohexane-polyethylene copolymer, cycloheptene-polyethylene copolymer as well as cyclo olefin polymers (COP) or such like, ditantalum pentoxide, glass, metal or combinations thereof.

19. Use of a carrier as claimed in one of claims 15 to 18, **characterised in that** the substrate is provided in the form of a membrane.

20. Use of a carrier as claimed in one of claims 15 to 18, **characterised in that** the individual modules are provided in the form of at least one monomer species selected from a group comprising amines, amides, dialkyloxyethane, and the monomer species contains residues from a group comprising H, alkyl or aryl.

21. Use of the carrier as claimed in one of claims 15 to 20 as array systems.

22. Use of the carrier as claimed in one of claims 15 to 21 as microfluidic components.

## Revendications

1. Procédé pour la modification au moins par endroits d'une surface d'un support en au moins un substrat par le dépôt d'un revêtement au moyen de polymérisation à plasma, le revêtement étant produit au moins par endroits avec des espaces libres pour la réception d'au moins une solution, en ce qu'avant ou pendant la polymérisation à plasma est effectuée une activation de la surface du substrat dans le plasma et en ce qu'au moins par endroits un polymère à plasma apte à gonfler est produit, et en ce qu'une structure tridimensionnelle est formée par le revêtement, **caractérisé en ce que** lors de l'activation, une introduction d'énergie est effectuée, de 5 à 20 fois supérieure à celle lors de la polymérisation à plasma.

2. Procédé selon la revendication 1, **caractérisé en ce que** l'activation est effectuée dans un réacteur avec un mélange réactionnel comprenant un gaz support et un gaz de réaction, le gaz support étant un gaz inerte et le gaz de réaction étant choisi parmi un groupe comprenant l'oxygène, l'ammoniac, H₂, N₂, CO₂, C₂H₂.

3. Procédé selon la revendication 1 ou 2, **caractérisé en ce qu'**entre l'activation et la polymérisation à plasma, un gaz de balayage est acheminé dans le réacteur, en particulier dans la chambre de réaction.

4. Procédé selon la revendication 3, **caractérisé en ce que** le gaz de balayage est un gaz inerte.

5. Procédé selon l'une quelconque des revendications 1 à 4, **caractérisé en ce que** l'activation et/ou la polymérisation à plasma s'effectuent avec une introduction d'énergie dans un intervalle avec une limite inférieure de 0,1 W et une limite supérieure de 2500 W.

6. Procédé selon l'une quelconque des revendications 1 à 5, **caractérisé en ce que** l'activation et/ou la polymérisation à plasma s'effectuent avec une introduction d'énergie dans un intervalle avec une limite inférieure de 2 W, en particulier de 5 W et une limite supérieure de 1700 W, en particulier de 300 W.

7. Procédé selon l'une quelconque des revendications 1 à 6, **caractérisé en ce que** l'activation est effectuée de préférence avec une puissance du plasma dans un intervalle avec une limite inférieure de 2 W et une limite supérieure de 2500 W et **en ce que** la polymérisation à plasma est effectuée avec une puissance du plasma dans un intervalle avec une limite inférieure de 0,1 W et une limite supérieure de 400 W.

8. Procédé selon l'une quelconque des revendications 1 à 7, **caractérisé en ce que** le revêtement est déposé par des plasmas pulsés.

9. Procédé selon l'une quelconque des revendications 1 à 8, **caractérisé en ce que** la polymérisation à plasma est effectuée par l'addition d'au moins une espèce de monomère.

10. Procédé selon l'une quelconque des revendications 1 à 9, **caractérisé en ce que** l'addition de ladite au moins une espèce de monomère s'effectue à l'état liquide et/ou gazeux.

11. Procédé selon l'une quelconque des revendications 1 à 10, **caractérisé en ce que** la pression pendant l'activation et/ou la polymérisation à plasma est choisie dans un intervalle avec une limite supérieure de 1,5 mbar, de préférence de 0,5 mbar et une limite inférieure de 0,05 mbar, de préférence de 0,2 mbar.

12. Procédé selon l'une quelconque des revendications 1 à 11, **caractérisé en ce que** l'activation est effectuée pendant un intervalle de temps avec une limite inférieure de 1 min, de préférence de 5 min, et une limite supérieure de 15 min, de préférence de 10 min.

13. Procédé selon l'une quelconque des revendications 1 à 12, **caractérisé en ce que** la polymérisation à plasma est effectuée pendant un intervalle de temps avec une limite inférieure de 1,5 min, de préférence de 10 min, et une limite supérieure de 60 min, de préférence de 20 min.

14. Procédé selon l'une quelconque des revendications 1 à 13, **caractérisé en ce que** le réacteur, en particulier la chambre de réaction, est balayé par de l'air après la polymérisation et **en ce que** la chambre est ventilée.

15. Utilisation d'un support en au moins un substrat, qui comporte au moins par endroits un revêtement réalisé par polymérisation à plasma de composants unitaires, revêtement qui comporte au moins par endroits un ou plusieurs espaces libres pour la réception d'au moins une solution, qui peut gonfler au moins par endroits et qui présente au moins par endroits une structure tridimensionnelle, la couche pouvant gonfler formant une couche d'hydrate, pour immobiliser des acides nucléiques tout en repoussant les protéines

16. Utilisation d'un support selon la revendication 15, **caractérisée en ce qu'**avec l'eau comme liquide de mesure, le revêtement formé présente des angles de contact dans un intervalle avec une limite inférieure de 35° et une limite supérieure de 65°.

17. Utilisation d'un support selon la revendication 15 ou 16, **caractérisée en ce que** le revêtement présente une épaisseur choisie dans un intervalle avec une limite inférieure de 4 nm, de préférence de 10 nm et une limite supérieure de 300 nm, de préférence de 40 nm.

18. Utilisation d'un support selon l'une quelconque des revendications 15 à 17, **caractérisée en ce que** le matériau du substrat est formé de préférence de plastique, d'un groupe comportant un polymère à base de carbone ou de silicium, d'un groupe comprenant le polystyrène (PS), le polyéthylène (PE), le poly(téréphtalate d'éthylène) (PET, PETP, PBTP), le polypropylène (PP), le poly(chlorure de vinyle) (PVC), le polyamide, la nitrocellulose, le poly(méthacrylate de méthyle) (PMMA), le styrène acrylonitrile (SAN), le polycarbonate, les copolymères de cyclooléfines (COC) comme le copolymère cyclopentène-polyéthylène, le copolymère cyclohexane-polyéthylène, le copolymère cycloheptène-polyéthylène, ainsi que les polymères de cyclooléfines (COP) ou similaires, le pentoxyde de ditantale, le verre, le métal, respectivement des combinaisons de ceux-ci.

19. Utilisation d'un support selon l'une quelconque des revendications 15 à 18, **caractérisée en ce que** le substrat est configuré comme membrane.

20. Utilisation d'un support selon l'une quelconque des revendications 15 à 18, **caractérisée en ce que** les composants unitaires d'au moins une espèce de monomères sont choisis parmi le groupe comprenant des amines, des amides, un dialkyloxyéthane, l'espèce de monomère comportant des radicaux d'un groupe comprenant H, un alkyle ou un aryle.

21. Utilisation d'un support selon l'une quelconque des revendications 15 à 20 pour des systèmes à tableaux de réactifs.

22. Utilisation d'un support selon l'une quelconque des revendications 15 à 21 pour des composants de microfluidique.
